# EUROPÄISCHE PATENTSCHRIFT

(11) **EP 2 265 838 B1**
(45) Veröffentlichungstag und Bekanntmachung des Hinweises auf die Patenterteilung: **31.10.2012**
(21) Anmeldenummer: 08873454.6
(22) Anmeldetag: 25.11.2008
(51) Int. Cl.: F16D 48/06

(54) **VERFAHREN UND VORRICHTUNG ZUM SCHLIEßEN EINER KUPPLUNG**
METHOD AND DEVICE FOR CLOSING A CLUTCH
PROCÉDÉ ET DISPOSITIF DE FERMETURE D'UN ACCOUPLEMENT

(30) Priorität: 19.03.2008 DE 102008000770
(43) Veröffentlichungstag der Anmeldung: 29.12.2010
(73) Patentinhaber: Robert Bosch GmbH, 70442 Stuttgart (DE)
(72) Erfinder: SEEL, Andreas, 71282 Hemmingen (DE)
(86) Internationale Anmeldenummer: PCT/EP2008/066142
(87) Internationale Veröffentlichungsnummer: WO 2009/115144

(56) Entgegenhaltungen:
- EP-A- 0 635 391
- EP-A- 1 741 950
- DE-A1- 10 352 611

## Beschreibung

### Stand der Technik

Gegenstand der vorliegenden Erfindung ist eine Vorrichtung und ein Verfahren zum Schließen einer Kupplung. Eine solche Kupplung befindet sich z. B. in einem Antriebsstrang eines Fahrzeuges. Ein Antriebsstrang setzt sich meist aus einem Antriebsaggregat, einem Getriebe und einer Antriebsachse mit Antriebsrädern zusammen, wobei sich häufig zwischen dem Antriebsaggregat und dem Getriebe eine Kupplung befindet. Über die Kupplung kann die Leistung des Antriebsaggregates auf das Getriebe und damit auf die Antriebsachse und die Antriebsräder übertragen werden. Durch Öffnen und Schließen kann der Anteil der Leistung der über die Kupplung auf das Getriebe übertragen wird, gesteuert werden. Aus der DE 195 40 921 ist eine Kupplung bekannt, bei der das Öffnen und Schließen durch einen Servoantrieb getätigt wird. Durch die Ansteuerung des Servoantriebes wird ein gewünschtes Kupplungsmoment realisiert. Aus der EP 0 635 391 ist ein Verfahren zur Tastpunktbestimmug bekannt nach dem Oberbegriff des Anspruchs 1, bei dem der Geschwindigkeitsverlauf des Schließens der Kupplung zur Bestimmung des aktuellen Tastpunkts in Abhängigkeit von einem bisher bekannten Tastpunkt erfolgt. Aus der DE 103 52 611 ist ein Verfahren und eine Vorrichtung zum Einlernen des Schleifpunkts einer Kupplung bekannt, bei dem in Abhängigkeit einer Differenzdrehzahl zwischen Kupplungseingangsseite und Kupplungsausgangsseite ein aktueller Tastpunkt bestimmt wird. Aus der EP 1 741 950 ist ein Verfahren zur Ermittlung eines Greifpunktes der Kupplung bekannt, bei dem der Greifpunkt in Abhängigkeit zweier Kupplungsstellungen berechnet wird.

### Offenbarung der Erfindung

Das erfindungsgemäße Verfahren und die Vorrichtung mit den Merkmalen der unabhängigen Ansprüche zum Schließen einer Kupplung werden insbesondere für die Optimierung von Verfahren für die Tastpunktadaption verwendet. Als Tastpunktposition wird die Betriebsposition der Kupplung verstanden, bei der die Kupplung beginnt, ein Drehmoment zwischen Antriebsaggregat und Getriebe zu übertragen. Diese Tastpunktposition ist von mehreren äußeren Parametern, wie z. B. Temperatur, Verschleiß und Alter der Kupplung, abhängig. Es gibt Verfahren, mit denen diese Tastpunktposition ermittelt wird, damit die Drehmomentübertragung zwischen Antriebsaggregat und Getriebe exakt gesteuert werden kann. Für das erfindungsgemäße Verfahren zum Schließen einer Kupplung ist eine solche vorbekannte Tastpunktposition gegeben, so dass das Schließen der Kupplung gemäß einem Geschwindigkeitsprofil erfolgt, dessen Verlauf von mindestens einer der vorbekannten Tastpunktpositionen abhängt. Wie oben erwähnt, hängt die Tastpunktposition von sich ändernden Umgebungsparametern ab, so dass das genannte Verfahren zur Ermittlung des Tastpunktes immer wieder wiederholt wird. Somit sind vorzugsweise mehrere vorbekannte Tastpunktpositionen vorhanden, wobei insbesondere die letzte vorbekannte Tastpunktposition vorhanden ist. Erfindungsgemäß hängt darüberhinaus der Verlauf des Geschwindigkeitsprofils von dem Abstand zwischen mindestens zwei der vorbekannten Tastpunktpositionen zueinander ab. Je nach Bauart der Kupplung und der Nutzungsbedingungen können die Abstände zwischen den nacheinander ermittelten Tastpunktpositionen untereinander sehr stark abweichen.

Technischer Hintergrund für das Schließen der Kupplung gemäß einen Geschwindigkeitsprofil dessen Verlauf von mindestens einer vorbekannten Tastpunktposition abhängig ist, dass einerseits ein zu schnelles Anfahren des Tastpunktes vermieden werden soll, andererseits die Dauer für den gesamten Schließvorgang der Kupplung minimiert werden soll. Ein zu schnelles Anfahren des unbekannten neuen Tastpunktes würde zu einem Sprung der Drehmomentübertragung zwischen Antriebsaggregat und Kupplung führen. Neben einem erhöhten Verschleiß der übertragenden mechanischen Komponenten könnte sich dies für Insassen in einem Fahrzeug als unangenehmer Ruck bemerkbar machen.

Der Vorteil dieser Erfindung besteht in einem verkürzten Verfahren zum Schließen der Kupplung, insbesondere für Tastpunktadaptionen, und dennoch einem langsamen Anfahren des neuen, unbekannten Tastpunktes der Kupplung.

Durch die Berücksichtigung mindestens zweier anstatt einer der vorbekannten Tastpunktpositionen zur Bestimmung des Geschwindigkeitsprofiles, wird das Verfahren zum Schließen der Kupplung, insbesondere für Tastpunktadaptionen, verkürzt und dennoch ein langsames Anfahren des neuen, unbekannten Tastpunktes der Kupplung erzielt.

Erfindungsgemäß durchläuft die Kupplung beim Schließen verschiedene Betriebspositionen und der Verlauf des Geschwindigkeitsprofils hängt von mindestens einer der vorbekannten Tastpunktpositionen derart ab, dass die Schließgeschwindigkeit der Kupplung bei einer Betriebsposition von dem Abstand zwischen der Betriebsposition und der mindestens einen vorbekannten Tastpunktposition abhängt. Insbesondere nimmt die Schließgeschwindigkeit mit abnehmendem Abstand der Betriebsposition zu der mindestens einen vorbekannten Tastpunktposition ab.

Der technische Hintergrund dieser Ausgestaltung ist, dass ein zu schnelles Anfahren des unbekannten neuen Tastpunktes vermieden wird und somit ein Sprung der Drehmomentübertragung zwischen Antriebsaggregat und Kupplung vermieden wird. Neben einem erhöhten Verschleiß der übertragenden mechanischen Komponenten könnte sich dies für Insassen in einem Fahrzeug als unangenehmer Ruck bemerkbar machen.

Der Vorteil dieses Merkmals besteht in einem verkürzten Verfahren zum Schließen der Kupplung, insbesondere für Tastpunktadaptionen, und dennoch einem langsamen Anfahren des neuen, unbekannten Tastpunktes der Kupplung.

In einer anderen Ausgestaltung ist vorgesehen, dass die Schließgeschwindigkeit der Kupplung eine vorgebbare Mindestgeschwindigkeit nicht unterschreitet.

Technischer Hintergrund und Vorteil hierfür ist das zur Einhaltung von kurzen Schließzeiten der Kupplung eine Mindestgeschwindigkeit zum Schließen der Kupplung nicht unterschritten werden soll.

Erfindungsgemäß durchläuft die Kupplung beim Schließen der Kupplung verschiedene Betriebspositionen und der Verlauf des Geschwindigkeitsprofils ist in zwei Phasen unterteilt. Zunächst wird die Kupplung mit einer ersten Geschwindigkeit bis zu einer Geschwindigkeitswechselposition geschlossen. Und anschließend wird die Kupplung mit einer zweiten Geschwindigkeit, die insbesondere kleiner als die erste Geschwindigkeit ist, weiter geschlossen.

Technischer Hintergrund ist, dass in dieser Ausgestaltung das Geschwindigkeitsprofil in zwei Phasen unterteilt wird. Bis zu einer zu bestimmenden Betriebsposition der Kupplung, der Geschwindigkeitswechselposition, wird die Kupplung mit einer ersten Geschwindigkeit geschlossen. Anschließend wird die Kupplung mit einer zweiten Geschwindigkeit weiter geschlossen. Insbesondere ist diese zweite Geschwindigkeit kleiner als die erste Geschwindigkeit.

Vorteil dieses Merkmals ist, dass die Steuerung, durch die Vereinfachung des Geschwindigkeitsprofils in zwei einzelne Phasen, vereinfacht wird. Dennoch bleibt sichergestellt, dass der neue, unbekannte Tastpunkt mit einer vorgebbaren Geschwindigkeit angefahren wird.

Nach der Erfindung hängt die Geschwindigkeitswechselposition von mindestens einer der vorbekannten Tastpunktpositionen ab. Erfindungsgemäß befindet sich die Geschwindigkeitswechselposition in einem vorgebbaren Abstand zu mindestens einer der vorbekannten Tastpunktpositionen.

Technischer Hintergrund ist, die Geschwindigkeitswechselposition als Betriebsposition der Kupplung derart vorzugeben, dass der neue, unbekannte Tastpunkt mit der zweiten Geschwindigkeit angefahren wird.

Vorteil dieses Merkmals ist, die Sicherstellung, dass der neue unbekannte Tastpunkt mit einer vorgebbaren zweiten Geschwindigkeit angefahren wird.

Nach der Erfindung hängt der vorgebbare Abstand der Geschwindigkeitswechselposition zu mindestens einer der vorbekannten Tastpunktpositionen von dem Abstand zwischen mindestens zwei der vorbekannten Tastpunktpositionen zueinander ab. Erfindungsgemäß hängt der vorgebbare Abstand der Geschwindigkeitswechselposition zu mindestens einer der vorbekannten Tastpunktposition derart von dem Abstand zwischen mindestens zwei der vorbekannten Tastpunktpositionen ab, dass der vorgebbare Abstand der Geschwindigkeitswechselposition zu mindestens einer der vorbekannten Tastpunktpositionen größer ist als der Abstand zwischen mindestens zwei der vorbekannten Tastpunktpositionen.

Technischer Hintergrund dieser Ausgestaltung ist, dass je nach Bauart der Kupplung und den Nutzungsbedingungen die Abstände zwischen den ermittelten vorbekannten Tastpunktpositionen stark variieren können. Zur Sicherstellung, dass der neue unbekannte Tastpunkt mit einer zweiten Geschwindigkeit angefahren wird, ist es zweckmäßig die Geschwindigkeitswechselposition als Betriebsposition der Kupplung in einem Abstand zu mindestens einer der vorbekannten Tastpunktpositionen derart zu positionieren, dass der Abstand größer ist als der Abstand zwischen mindestens zwei der vorbekannten Tastpunktpositionen zueinander.

Vorteil dieses Merkmals ist, die Sicherstellung, dass der neue unbekannte Tastpunkt mit einer vorgebbaren zweiten Geschwindigkeit angefahren wird, dadurch dass die Geschwindigkeitswechselposition als Betriebsposition der Kupplung in einem Abstand zu mindestens einer der vorbekannten Tastpunktpositionen derart positioniert wird, dass der Abstand größer ist als der Abstand zwischen mindestens zwei der vorbekannten Tastpunktpositionen zueinander.

In einer weiteren Ausgestaltung wird der Abstand zwischen Betriebspositionen der Kupplung in mindestens einer Maßeinheit verarbeitet. Insbesondere ist die Verwendung des Längenmaßes und/oder des Zeitmaßes vorgesehen.

Technischer Hintergrund ist, dass die erfindungsgemäße Steuerung auf Betriebspositionen der Kupplung basiert. Je nach Systemausgestaltung kann es vorteilhaft sein, nicht nur eine Maßeinheit zu verwenden, sondern mindestens eine Maßeinheit, wobei insbesondere sich das Längenmaß und/oder Zeitmaß anbietet.

Vorteil dieser Ausgestaltung ist, dass je nach Systemausgestaltung die bereits vorhandenen Sensoren, insbesondere zur Erfassung von Betriebspositionen der Kupplung, welche insbesondere eine Maßeinheit, z.B. Längenmaß und/oder Zeitmaß messen, verwendet werden können.

Ausführungsbeispiele der Erfindung sind in den Zeichnungen dargestellt und in der nachfolgenden Beschreibung näher erläutert. Es zeigen
Figur 1
   Antriebsstrang eines Fahrzeuges
Figur 2:
   Geschwindigkeit-/Zeit-Diagramm
Figur 3:
   Weg-/Zeit-Diagramm
Figur 4:
   Ablaufdiagramm des Verfahrens zum Schließen einer Kupplung

### Ausführungsformen der Erfindung

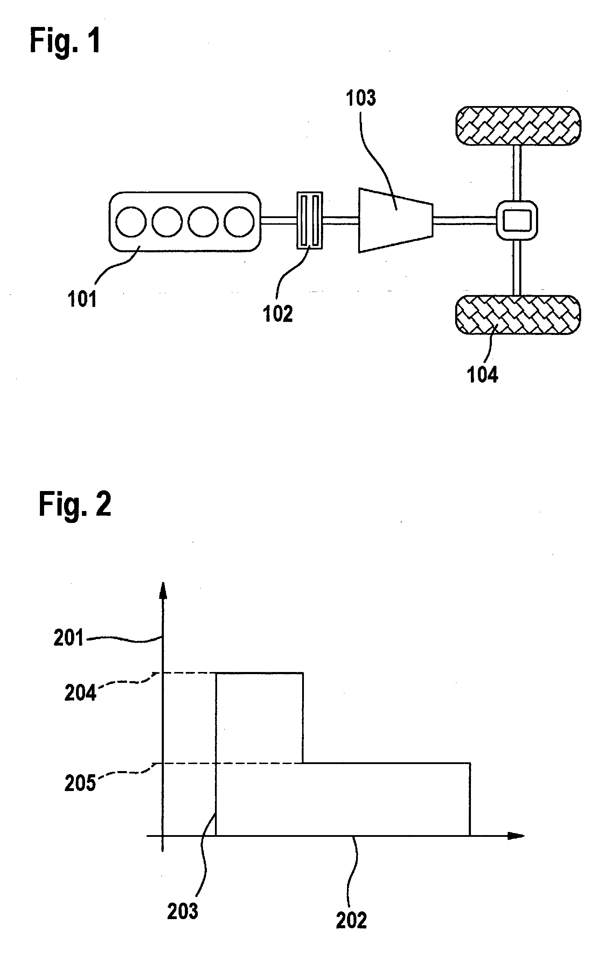

In der Figur 1 ist ein Antriebsstrang eines Fahrzeugs gezeigt. Der Antriebsstrang setzt sich aus einem Antriebsaggregat 101, insbesondere einem Verbrennungsmotor, einer Kupplung 102, einem Getriebe 103 und einer Antriebsachse mit Antriebsrädern 104 zusammen.

In der Figur 2 ist ein Geschwindigkeits-/Zeit-Diagramm dargestellt. Auf der y-Achse 201 ist die Geschwindigkeit aufgetragen, auf der x-Achse 202 ist die Zeit aufgetragen. Im Diagramm ist ein zweiphasiger Geschwindigkeitsverlauf aufgetragen. Zum Zeitpunkt 203 wird begonnen die Kupplung zu schließen. Zunächst wird die Kupplung mit der ersten Geschwindigkeit 204 geschlossen und ab einer Geschwindigkeitswechselposition mit einer zweiten Geschwindigkeit 205 weiter geschlossen.

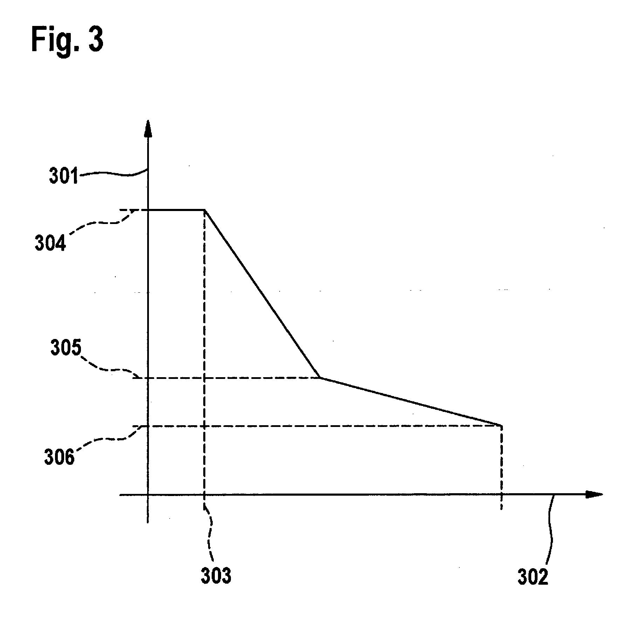

In der Figur 3 ist ein Weg-/Zeit-Diagramm dargestellt. Auf der y-Achse 301 ist der zurückgelegte Weg der Kupplung aufgetragen. Auf der x-Achse 302 ist die Zeit aufgetragen. In der Betriebsposition 304 befindet sich die Kupplung im geöffneten Zustand. Zum Zeitpunkte 303 wird die Kupplung mit einer ersten Geschwindigkeit bis zur Betriebsposition Geschwindigkeitswechselposition 305 geschlossen. Anschließend wird die Kupplung mit einer zweiten Geschwindigkeit bis zum neuen unbekannten Tastpunkt 306 geschlossen.

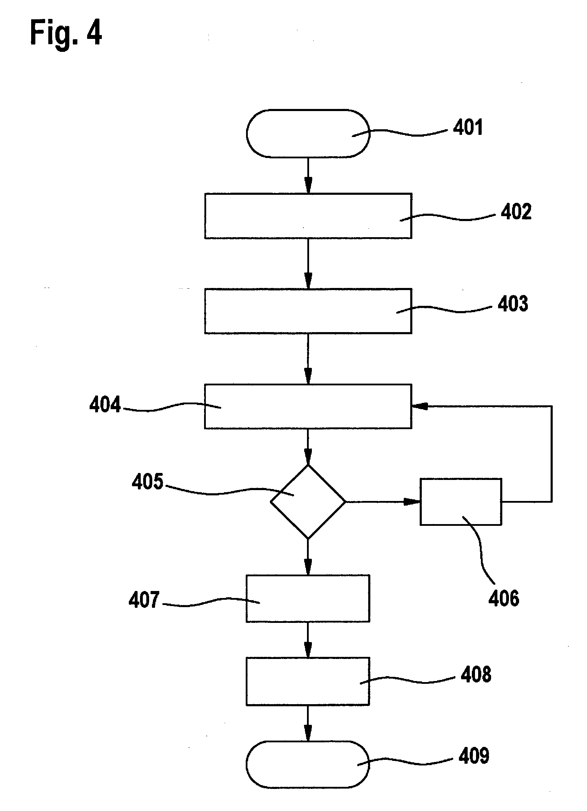

In der Figur 4 ist ein Ablaufdiagramm des Verfahrens zum Schließen einer Kupplung dargestellt. Mit Schritt 401 startet das Verfahren. In Schritt 402 wird die mindestens eine vorbekannte Tastpunktposition eingelesen. Im Schritt 403 wird auf Grundlage der mindestens einen vorbekannten Tastpunktposition die Betriebsposition für die Geschwindigkeitswechselposition berechnet. In Schritt 404 wird die aktuelle Betriebsposition der Kupplung eingelesen. In Schritt 405 wird überprüft, ob sich die aktuelle Betriebsposition noch vor der Geschwindigkeitswechselposition befindet. Wenn sich die aktuelle Betriebsposition noch vor der Wechselposition befindet, wird mit Schritt 406 die Kupplung mit der ersten Geschwindigkeit weiter geschlossen. Das Verfahren springt in diesem Fall zu Schritt 404 zurück. Wenn sich in Schritt 405 die aktuelle Betriebsposition hinter der Wechselposition befindet, wird in Schritt 407 die Kupplung mit der zweiten Geschwindigkeit weiter geschlossen. In Schritt 408 wird bei Erreichen des neuen, unbekannten Tastpunktes dieser erfasst. Mit Schritt 409 endet dieses Verfahren.

## Patentansprüche

1. Verfahren, insbesondere für eine Tastpunktadaption, zum Schließen einer Kupplung mit mindestens einer vorbekannten Tastpunktposition, wobei das Schließen der Kupplung gemäß einem Geschwindigkeitsprofil erfolgt, dessen Verlauf von mindestens einer der vorbekannten Tastpunktpositionen abhängt, wobei die Kupplung beim Schließen der Kupplung verschiedene Betriebspositionen durchläuft und der Verlauf des Geschwindigkeitsprofils in zwei Phasen unterteilt ist:
a. zunächst wird die Kupplung mit einer ersten Geschwindigkeit bis zu einer Geschwindigkeitswechselposition geschlossen und
b. anschließend mit einer zweiten Geschwindigkeit, die insbesondere kleiner als die erste Geschwindigkeit ist, weiter geschlossen, wobei
sich die Geschwindigkeitswechselposition in einem vorgebbaren Abstand zu mindestens einer der vorbekannten Tastpunktpositionen befindet und wobei der vorgebbare Abstand der Geschwindigkeitswechselposition zu mindestens einer der vorbekannten Tastpunktpositionen von dem Abstand zwischen mindestens zwei der vorbekannten Tastpunktpositionen abhängt,
**dadurch gekennzeichnet, dass** der vorgebbare Abstand der Geschwindigkeitswechselposition zu mindestens einer der vorbekannten Tastpunktpositionen derart von dem Abstand zwischen mindestens zwei der vorbekannten Tastpunktpositionen abhängt, dass der vorgebbare Abstand der Geschwindigkeitswechselposition zu mindestens einer der vorbekannten Tastpunktpositionen größer ist als der Abstand zwischen mindestens zwei der vorbekannten Tastpunktpositionen.

2. Verfahren nach Anspruch 1 **dadurch gekennzeichnet, dass** die Kupplung beim Schließen der Kupplung verschiedene Betriebspositionen durchläuft und dass der Verlauf des Geschwindigkeitsprofils von mindestens einer der vorbekannten Tastpunktpositionen derart abhängt,
dass die Schließgeschwindigkeit der Kupplung bei einer Betriebsposition von dem Abstand zwischen der Betriebsposition und der mindestens einen vorbekannten Tastpunktposition abhängt, insbesondere dass die Schließgeschwindigkeit mit abnehmenden Abstand der Betriebsposition zu der mindestens einen vorbekannten Tastpunktposition abnimmt.

3. Verfahren nach den vorhergehenden Ansprüchen **dadurch gekennzeichnet, dass** die Kupplung beim Schließen der Kupplung verschiedene Betriebspositionen durchläuft und
dass der Verlauf des Geschwindigkeitsprofils von dem Abstand zwischen mindestens zwei der vorbekannten Tastpunktpositionen abhängt.

4. Verfahren nach den vorhergehenden Ansprüchen **dadurch gekennzeichnet, dass** die Schließgeschwindigkeit der Kupplung eine vorgebbare Mindestgeschwindigkeit nicht unterschreitet.

5. Verfahren nach den vorhergehenden Ansprüchen **dadurch gekennzeichnet, dass** der Abstand zwischen den Betriebspositionen der Kupplung in mindestens einer Maßeinheit verarbeitet wird, insbesondere als Längenmaß und/oder Zeitmaß.

6. Vorrichtung, insbesondere für eine Tastpunktadaption, zum Schließen einer Kupplung mit mindestens einer vorbekannten Tastpunktposition, wobei Mittel zum Schließen der Kupplung gemäß einem Geschwindigkeitsprofil vorgesehen sind, dessen Verlauf von mindestens einer der vorbekannten Tastpunktpositionen abhängt, wobei die Kupplung beim Schließen der Kupplung verschiedene Betriebspositionen durchläuft und der Verlauf des Geschwindigkeitsprofils in zwei Phasen unterteilt ist:
a. zunächst wird die Kupplung mit einer ersten Geschwindigkeit bis zu einer Geschwindigkeitswechselposition geschlossen und
b. anschließend mit einer zweiten Geschwindigkeit, die insbesondere kleiner als die erste Geschwindigkeit ist, weiter geschlossen,
wobei
sich die Geschwindigkeitswechselposition in einem vorgebbaren Abstand zu mindestens einer der vorbekannten Tastpunktpositionen befindet und wobei der vorgebbare Abstand der Geschwindigkeitswechselposition zu mindestens einer der vorbekannten Tastpunktpositionen von dem Abstand zwischen mindestens zwei der vorbekannten Tastpunktpositionen abhängt, **dadurch gekennzeichnet, dass** Mittel zum Schließen der Kupplung vorgesehen sind, dass der vorgebbare Abstand der Geschwindigkeitswechselposition zu mindestens einer der vorbekannten Tastpunktpositionen derart von dem Abstand zwischen mindestens zwei der vorbekannten Tastpunktpositionen abhängt, dass der vorgebbare Abstand der Geschwindigkeitswechselposition zu mindestens einer der vorbekannten Tastpunktpositionen größer ist als der Abstand zwischen mindestens zwei der vorbekannten Tastpunktpositionen.

7. Vorrichtung nach Anspruch 6 **dadurch gekennzeichnet, dass** Mittel zum Schließen der Kupplung vorgesehen sind, dass die Kupplung beim Schließen der Kupplung verschiedene Betriebspositionen durchläuft und dass der Verlauf des Geschwindigkeitsprofils von mindestens einer der vorbekannten Tastpunktpositionen derart abhängt,
dass die Schließgeschwindigkeit der Kupplung bei einer Betriebsposition von dem Abstand zwischen der Betriebsposition und der mindestens einen vorbekannten Tastpunktposition abhängt, insbesondere dass die Geschwindigkeit des Schließens der Kupplung mit abnehmenden Abstand der Betriebsposition zu der mindestens einen vorbekannten Tastpunktposition abnimmt.

## Claims

1. Method, in particular for adapting a bite point, for closing a clutch having at least one previously known bite point position, wherein the closing of the clutch takes place according to a speed profile whose course depends on at least one of the abovementioned bite point positions, wherein during the closing of the clutch the clutch runs through various operating positions and the course of the speed profile is divided into two phases:
a. firstly the clutch is closed with a first speed up to a speed changeover position, and
b. is subsequently closed further with a second speed which is, in particular, lower than the first speed,
wherein
the speed changeover position is located at a predefinable distance from at least one of the previously known bite point positions,
and wherein the predefinable distance between the speed changeover position and at least one of the previously known bite point positions depends on the distance between at least two of the previously known bite point positions,
**characterized in that** the predefinable distance between the speed changeover position and at least one of the previously known bite point positions depends on the distance between at least two of the previously known bite point positions such that the predefinable distance between the speed changeover position and at least one of the previously known bite point positions is greater than the distance between at least two of the previously known bite point positions.

2. Method according to Claim 1, **characterized in that** during the closing of the clutch the clutch runs through various operating positions, and **in that** the course of the speed profile depends on at least one of the previously known bite point positions such that the closing position of the clutch in the case of an operating position depends on the distance between the operating position and the at least one previously known bite point position, in particular such that the closing speed decreases as the distance between the operating position and the at least one previously known bite point position decreases.

3. Method according to the preceding claims, **characterized in that** during the closing of the clutch the clutch runs through various operating positions, and
**in that** the course of the speed profile depends on the distance between at least two of the previously known bite point positions.

4. Method according to the preceding claims, **characterized in that** the closing speed of the clutch does not drop below a predefinable minimum speed.

5. Method according to the preceding claims, **characterized in that** the distance between the operating positions of the clutch is processed in at least one unit of measure, in particular a measure of length and/or measure of time.

6. Device, in particular for adapting a bite point, for closing a clutch having at least one previously known bite point position, wherein means for closing the clutch are provided according to a speed profile whose course depends on at least one of the abovementioned bite point positions, wherein during the closing of the clutch the clutch runs through various operating positions and the course of the speed profile is divided into two phases:
a. firstly the clutch is closed with a first speed up to a speed changeover position, and
b. is subsequently closed further with a second speed which is, in particular, lower than the first speed,
wherein
the speed changeover position is located at a predefinable distance from at least one of the previously known bite point positions,
and wherein the predefinable distance between the speed changeover position and at least one of the previously known bite point positions depends on the distance between at least two of the previously known bite point positions,
**characterized in that** means for closing the clutch are provided, **in that** the predefinable distance between the speed changeover position and at least one of the previously known bite point positions depends on the distance between at least two of the previously known bite point positions such that the predefinable distance between the speed changeover position and at least one of the previously known bite point positions is greater than the distance between at least two of the previously known bite point positions.

7. Device according to Claim 6, **characterized in that** means for closing the clutch are provided, **in that** during the closing of the clutch the clutch runs through various operating positions, and **in that** the course of the speed profile depends on at least one of the previously known bite point positions,
such that the closing position of the clutch in the case of an operating position depends on the distance between the operating position and the at least one previously known bite point position, in particular such that the closing speed decreases as the distance between the operating position and the at least one previously known bite point position decreases.

## Revendications

1. Procédé de fermeture d'un embrayage présentant au moins une position connue à l'avance d'un point de détection, notamment pour l'adaptation du point de détection, et dans lequel la fermeture de l'embrayage s'effectue en fonction d'un profil de vitesse dont l'évolution dépend d'au moins l'une des positions connues à l'avance du point de détection,
l'embrayage suivant différentes positions de fonctionnement lors de la fermeture de l'embrayage et l'évolution du profil de vitesse étant divisée en deux phases, à savoir :
a. l'embrayage est d'abord fermé à une première vitesse jusqu'à une position de changement de vitesse,
b. il est ensuite fermé davantage à une deuxième vitesse en particulier plus basse que la première vitesse,
la position de changement de vitesse étant située à une distance prédéterminable d'au moins l'une des positions connues à l'avance du point de détection,
la distance prédéterminable de la position de changement de vitesse par rapport à au moins l'une des positions connues à l'avance du point de détection dépendant de la distance entre au moins deux des positions connues à l'avance du point de détection, **caractérisé en ce que**
la distance prédéterminable de la position de changement de vitesse par rapport à au moins l'une des positions connues à l'avance du point de détection dépend de la distance entre au moins deux des positions connues à l'avance du point de détection de telle sorte que la distance prédéterminable de la position de changement de vitesse par rapport à au moins l'une des positions connues à l'avance du point de détection est supérieure à la distance entre au moins deux des positions connues à l'avance du point de détection.

2. Procédé selon la revendication 1, **caractérisé en ce que** lors de la fermeture de l'embrayage, l'embrayage passe par différentes positions de fonctionnement, **en ce que** l'évolution du profil de vitesse dépend d'au moins l'une des positions connues à l'avance du point de détection, **en ce que** dans une position de fonctionnement, la vitesse de fermeture de l'embrayage dépend de la distance entre la position de fonctionnement et la ou les positions connues à l'avance du point de détection et en particulier **en ce que** la vitesse de fermeture diminue lorsque la distance entre la position de fonctionnement et la ou les positions connues à l'avance du point de détection diminue.

3. Procédé selon l'une des revendications précédentes, **caractérisé en ce que** l'embrayage passe par différentes positions de fonctionnement lors de la fermeture de l'embrayage et **en ce que** l'évolution du profil de vitesse dépend de la distance entre au moins deux des positions connues à l'avance du point de détection.

4. Procédé selon l'une des revendications précédentes, **caractérisé en ce que** la vitesse de fermeture de l'embrayage n'est pas inférieure à une vitesse minimale prédéterminable.

5. Procédé selon l'une des revendications précédentes, **caractérisé en ce que** la distance entre les positions de fonctionnement de l'embrayage est traitée dans au moins une unité de mesure, notamment une unité de longueur et/ou une unité de temps.

6. Dispositif de fermeture d'un embrayage présentant au moins une position connue à l'avance d'un point de détection, notamment pour l'adaptation du point de détection, le dispositif présentant des moyens de fermeture de l'embrayage selon un profil de vitesse dont l'évolution dépend d'au moins l'une des positions connues à l'avance du point de détection,
l'embrayage suivant différentes positions de fonctionnement lors de la fermeture de l'embrayage et l'évolution du profil de vitesse étant divisée en deux phases, à savoir :
a. l'embrayage est d'abord fermé à une première vitesse jusqu'à une position de changement de vitesse,
b. il est ensuite fermé davantage à une deuxième vitesse en particulier plus basse que la première vitesse,
la position de changement de vitesse étant située à une distance prédéterminable d'au moins l'une des positions connues à l'avance du point de détection,
la distance prédéterminable de la position de changement de vitesse par rapport à au moins l'une des positions connues à l'avance du point de détection dépendant de la distance entre au moins deux des positions connues à l'avance du point de détection, **caractérisé en ce que**
le dispositif présente des moyens de fermeture de l'embrayage et
**en ce que** la distance prédéterminable de la position de changement de vitesse par rapport à au moins l'une des positions connues à l'avance du point de détection dépend de la distance entre au moins deux des positions connues à l'avance du point de détection de telle sorte que la distance prédéterminable de la position de changement de vitesse par rapport à au moins l'une des positions connues à l'avance du point de détection est supérieure à la distance entre au moins deux des positions connues à l'avance du point de détection.

7. Dispositif selon la revendication 6, **caractérisé en ce qu'**il présente des moyens de fermeture de l'embrayage, **en ce que** lors de la fermeture de l'embrayage, l'embrayage passe par différentes positions de fonctionnement, **en ce que** l'évolution du profil de vitesse dépend d'au moins l'une des positions connues à l'avance du point de détection, **en ce que** dans une position de fonctionnement, la vitesse de fermeture de l'embrayage dépend de la distance entre la position de fonctionnement et la ou les positions connues à l'avance du point de détection et en particulier **en ce que** la vitesse de fermeture de l'embrayage diminue lorsque la distance entre la position de fonctionnement et la ou les positions connues à l'avance du point de détection diminue.
